# EUROPÄISCHE PATENTSCHRIFT

(11) **EP 1 927 580 B1**
(45) Veröffentlichungstag und Bekanntmachung des Hinweises auf die Patenterteilung: **12.01.2011**
(21) Anmeldenummer: 06024908.3
(22) Anmeldetag: 01.12.2006
(51) Int. Cl.: C01G 49/00, C21B 13/00, B22F 9/16, C22B 7/00, C22C 33/02, B22F 9/22

(54) **Verfahren zur Herstellung von Eisenpulver oder Stahlpulver aus Eisenoxid-Pulver durch Oxidation und Reduktion**
Process for making iron powder or microalloyed steel powder from iron oxide powder by oxidation and reduction
Procédé de production d'une poudre de fer ou d'une poudre d'acier à partir d'une poudre d'oxide de fer par oxidation et reduction

(43) Veröffentlichungstag der Anmeldung: 04.06.2008
(73) Patentinhaber: Ruthner, Michael J., 4865 Nussdorf am Attersee (AT)
(72) Erfinder: Ruthner, Michael J., 4865 Nussdorf am Attersee (AT)
(74) Vertreter: Eisenführ, Speiser & Partner

(56) Entgegenhaltungen:
- EP-A2- 0 232 246
- DE-A1- 1 425 195
- DE-B- 1 125 459
- GB-A- 1 219 674
- GB-A- 1 288 252
- US-A- 2 217 569
- US-A- 3 677 749
- US-A- 3 975 186
- US-A1- 2003 110 889

## Beschreibung

Die Erfindung betrifft ein Verfahren zur Herstellung von für Pulvermetallurgie geeignetem Eisenpulver oder mikrolegiertem Stahlpulver.

Aus GB 1 219 674 ist ein Verfahren zum Herstellen von Stahlpulver mit den folgenden Schritten bekannt: Aus salzsauren Abfallbeizen wird sprühgeröstetes Eisen(III)oxid durch den Aman-Prozess, bei dem die Abfallbeize unter Zugabe von Schwefel in eine geheizte Kammer eingesprüht und geröstet wird, gewonnen. Dabei entstehen grüne oxidische Mikrogranulate, wodurch das Schüttgewicht des letztendlich entstehenden Eisenpulvers erhöht wird. Die oxidischen Mikrogranulate werden in einem Ofen mit einer Wasserstoff-Atmosphäre bei 860-1.200°C reduziert und gesintert. Das Reduktionsprodukt wird in einer Atmosphäre mit 95 % N und 5% H abgekühlt.
Weitere derartige Verfahren sind aus EP0232246 B1 und US 3,677,749 bekannt. Sprühgeröstetes Eisen(III)oxidpulver, welches aus den erwähnten Abfallbeizen gewonnen wird, weisen prozess- und produktionsbedingt weitgestreute chemische und physikalische Werte auf. Insbesondere handelt es sich um weitgestreute Restchloridgehalte, wechselnde Anteile an unerwünschten magnetischen Eisenoxidanteilen, weitgestreuten Werten der spezifischen Oberfläche und dem gemäß der primären Eisenoxidteilchengröße. Ferner ergeben sich Probleme bei der Handhabung von staubförmigen Eisenoxidhohlkugelgranulaten. Aufgrund der unterschiedlichen Materialeigenschaften eignen sich sprühgeröstete Eisenoxide nicht oder nur in geringem Umfang als Ausgangsmaterial zur Herstellung von Eisen- oder Stahlpulvern, welche für die pulvermetallurgische Formgebungsverfahren als Rohstoff Verwendung finden sollen. Vor allem verhindern erhebliche schwankende Salzgehalte (z.B. 0,05 bis 2,0 Gew.-% Cl⁻), voneinander abweichende Werte der spezifischen Oberfläche (z.B. 1,2 bis 24,0 m²/g), unterschiedliche Schüttgewichte (0,3 bis 1,2 g/cm³) sowie wechselnde magnetische Anteile (0,1 bis 3 Gew.-%) den großtechnischen Einsatz von sprühgerösteten Eisenoxiden als Ausgangsstoffe zur Herstellung von homogenen und für pulvermetallurgische Anwendungen geeigneten Eisen- oder mikrolegierten Stahlpulvern. An derartige Eisenpulver und mikrolegierte Stahlpulver werden präzise Materialanforderungen gestellt, welche bei Verwendung von handelsüblichen sprühgerösteten Eisenoxiden als Ausgangsmaterial in großtechnischen Einsatz nicht zu erreichen sind.

Wechselnde Restchloridgehalte führen bei thermischen Behandlungen gemeinsam mit den in sprühgerösteten Eisenoxiden enthaltenen Begleitelementen (Fe²⁺-Anteile sowie Spuren von niedrig schmelzenden Gläsern) zur Bildung von flüssigen Phasen, welche das Kristallwachstum begünstigen und damit die Kennwerte sprühgerösteter Eisenoxide in unkontrollierbarer Weise beeinflussen.

Nur ein Teil der Gehalte an Restchloriden in sprühgerösteten Eisenoxiden ist wasserlöslich. Ein verbleibender Restchloridgehalt im Ausmaß von wenigen 100 ppm Cl⁻ verbleibt zurück. Darüber hinaus beeinflussen auch unterschiedliche Werte der spezifischen Oberfläche (BET) sprühgerösteter Eisenoxide die Ausbildung der erforderlichen einheitlichen Mikrogefüge.

Die in den sprühgerösteten Eisenoxiden enthaltenen Salzgehalte und deren Zersetzungsprodukte verursachen darüber hinaus sowohl im Bereich niedriger Temperaturen als auch im Hochtemperaturbereich eine rasche Korrosion wichtiger Konstruktionsteile.

In Abhängigkeit der Verfahrensführung unterscheidet man gegenwärtig im wesentlichen drei Arten von sprühgerösteten Eisenoxiden, welche als Ausgangsstoffe für die Herstellung von Eisenpulvern und legierten Stahlpulvern eingesetzt werden könnten. Es handelt sich um UPL-, PPP- und CPP-Eisenoxide. Bei sprühgerösteten UPL-Eisenoxiden handelt es sich um Produkte, welche aus unaufbereiteten Eisenchloridlösungen, sogenannten salzsauren Abbeizen, in der Stahlindustrie anfallen. Sprühgeröstete PPP-Eisenoxide stammen aus aufbereiteten salzsauren Abbeizen, aus denen HCl-unlösliche Bestandteile zum Großteil vorher durch Filtration abgetrennt wurden. Sprühgeröstete CPP-Eisenoxide sind Produkte, bei welchen zur Abtrennung von einigen, vor allem metallurgischen Begleitelementen, chemische Fällungsprozesse vorgelagert wurden.

Aufgabe der Erfindung ist es, ein Verfahren der eingangs genannten Art zu schaffen, bei dem Eisenpulver oder mikrolegierte Stahlpulver mit den von der Pulvermetallurgie geforderten reproduzierbaren Rohstoffanforderungen hergestellt werden können.

Diese Aufgabe wird erfindungsgemäß durch die Merkmale des Patentanspruches 1 gelöst.

Überraschenderweise gelingt es, mit dem erfindungsgemäßen Verfahren aus sprühgerösteten Eisenoxiden mit unterschiedlichen chemischen und physikalischen Kennwerten, welche beim Regenerieren von salzsauren Abbeizen anfallen, für die Pulvermetallurgie hochwertige einsatzfähige homogene Eisenoxidrohstoffe zu bilden und daraus Eisen- oder mikrolegierte Stahlpulver herzustellen.

Bei der Erfindung kommt ein mehrstufiges Verfahren zur Herstellung von homogenen sprühgerösteten Eisenoxiden und daraus resultierende Eisen- oder mikrolegierten Stahlpulverqualitäten zur Anwendung. Diese schließen durch ihre Materialeigenschaften die Lücke zwischen Carbonyl-Eisenpulvem einerseits und den Eisen- oder Stahlpulvern, welche durch das Schwammeisenverfahren oder durch Verdüsen von flüssigem Stahl andererseits hergestellt werden. Durch die Erfindung können sprühgeröstete Eisenoxide, welche ohne oder mit vorhergehender chemischer oder physikalischer Reinigung der salzsauren Abbeize in Stahlwerken als UPL-, PPP- oder CPP-Eisenoxide anfallen und Handelsprodukte darstellen, als Ausgangsprodukte zur Stahlpulverherstellung nützlich gemacht werden. Durch die erfindungsgemäßen Eisenoxidaufbereitungsstufen werden Eisen- oder mikrolegierte Stahlpulver hergestellt, welche die von der Pulvermetallurgie geforderten, reproduzierbaren homogenen Eisenpulver-Rohstoffeigenschaften haben.

In diesem Zusammenhang kommen sprühgeröstete Eisenoxide mit geringen Salzgehalten, vorwiegend Restchloridgehalten, vorzugsweise geringen Gehalten an magnetischen Eisenoxidanteilen, konstanten Werten des Schüttgewichtes sowie konstanten Werten der spezifischen Oberfläche und damit der vorherrschenden durchschnittlichen Primärteilchengröße zur Anwendung.

Vorzugsweise aufgrund genau definierter reduzierter Salzgehalte insbesondere der Restchloridgehalte (Summe Cl⁻ in ppm) sowie des Schüttgewichtes, konstanter Werte der spezifischen Oberfläche (BET) und des Fe²⁺-Anteils, werden die notwendigen reproduzierbaren pulvermetallurgischen Voraussetzungen geschaffen.

Beim erfindungsgemäßen Verfahren gelingt es, auch aus verunreinigten instabilen sprühgerösteten Eisenoxiden für die Pulvermetallurgie brauchbare Eisen- oder mikrolegierte Stahlpulver herzustellen, wobei in einer ersten Verfahrensstufe sprühgeröstete Eisenoxide beispielsweise mit de-ionisiertem Wasser angemischt und die Anschlämmung unter dem Zusatz von Neutralisationsmittel auf einen pH-Wert von 7,0 ± 1,0 gebracht werden. Anschließend wird die Anschlämmung filtriert und der Filterkuchen mit de-ionisiertem Wasser ausgewaschen, bis der Restchloridgehalt des Eisenoxids um mindestens 50 %, vorzugsweise um mehr als 70 % gegenüber dem eingesetzten Eisenoxid auf Werte unter 350 ppm Cl⁻ reduziert wird. Das ausgewaschene Eisenoxid wird unter dem Zusatz von Tensiden nass aufgemahlen, von den magnetischen Eisenoxidanteilen durch magnetische Nassabscheidung getrennt und die gereinigte Eisenoxidsuspension mit 0,5 Gew.-% Bindemittelanteile versetzt. Durch die Sprühtrocknung wird die Suspension zu grünem Eisenoxid-Mikrogranulaten verarbeitet, wobei 95 Gew.-% der Granulate in Durchmessern von 5,0 µm bis 300 µm vorliegen.

Vorzugsweise werden die von ihren wasserlöslichen Verunreinigungen befreiten Mikrogranulate zunächst aufgemahlen oder verrieben und in einer zweiten Verfahrensstufe zum zusätzlich erforderlichen Abbau der schwer wasserlöslichen Restchloridgehalte kurzzeitig innerhalb von wenigen Sekunden, unter oxidierenden Bedingungen im Strahlungsbereich bei Temperaturen zwischen 900°C und 1350°C thermisch zersetzt, wodurch die Restchloridgehalte auf weniger als 100 ppm Cl⁻ absinken.

Ferner verfügt man gleichzeitig über einen Kontrollmechanismus, mit dem es gelingt, die grünen restchloridarmen sprühgetrockneten Eisenoxidgranulate unter oxidierenden Bedingungen durch eine kurzzeitige thermische Behandlung innerhalb weniger Sekunden im Strahlungsbereich bei Temperaturen zwischen 900°C und 1350°C zur Stabilisierung eines gewünschten Wertes der spezifischen Oberfläche (BET) einzusetzen, sodass die vorgegebene spezifische Oberfläche (BET) der nunmehr leicht angesinterten Eisenoxid-Mikrogranulate in einem im voraus vorgegebenen Kennwert im Bereich <10m²/g, insbesondere von 0,1 bis 2,0 m²/g liegt. Darüber hinaus werden durch die chemische Hochtemperaturbehandlung die Zersetzungsprodukte der Granulier- und Suspensionhilfsmittel sowie Feuchtigkeitsgehalte abgebaut und aus dem System entfernt.

Die vorgesinterten hinsichtlich des Wertes der spezifischen Oberfläche (BET) und des Restchloridgehaltes Cl⁻ stabilisierten Eisenoxid-Mikrogranulate werden anschließend bei Temperaturen unter 1050°C in loser Schüttung vorzugsweise mit reinem Wasserstoff reduziert, wobei das Schüttgewicht der reduzierten Eisen- oder mikrolegierten Stahlpulver über 1200 g/dm³ und der Kohlenstoffgehalt unter 0,01 Gew.-% liegt. Die kurzzeitig unter oxidierenden Bedingungen leicht angesinterten Eisenoxid-Mikrogranulate weisen bei sinkenden Werten der spezifischen Oberfläche erhöhte Festigkeitswerte auf, wodurch eine Staubentwicklung während der Reduktion mit Wasserstoff wesentlich reduziert wird.

Die Reduktion der leicht angesinterten Eisenoxid-Mikrogranulate mit Wasserstoff in loser Schüttung kann durch ein stationäres oder wanderndes Fließbett, zirkulierenden Wirbelschicht, einen Wanderrost, ein Drehrohr oder durch einen vertikalen, indirekten beheizten Ofen erfolgen.

Zur weiteren Stabilisierung der Werte der spezifischen Oberfläche können die erzeugten Eisenoxid-Mikrogranulate zu Mikrogranulatfraktionen klassiert werden. Diese weisen sehr geringe Unterschiede in den Werten der spezifischen Oberfläche sowie des Restchloridgehaltes auf. Für spezielle pulvermetallurgische Anwendungszwecke werden die klassierten Eisen- oder mikrolegierten Stahlpulver entsprechend gemischt, um den betrieblich vorgegebenen Granulatverteilungskurven zu entsprechen.

Ein weiterer Vorteil besteht darin, dass die im Strahlungsbereich vorgesinterten losen Eisenoxidgranulate nach der Reduzierung mit Wasserstoff nur fallweise eine geringe Neigung zum Zusammenkleben zeigen. Sollte es fallweise zu einer Brückenbildung kommen, lassen sich die Agglomerate durch eine leichte mechanische Einwirkung wieder trennen.

In vorteilhafter Weise erfolgt die oxidierende und reduzierende Behandlung der Eisenoxid-Mikrogranulate in einer Hitze.

Die erfindungsgemäße Aufbereitung der sprühgerösteten Eisenoxide zur Herstellung von Eisen- oder mikrolegiertem Stahlpulver umfasst vorzugsweise die Zerstörung der Hohlkugelstruktur, vorzugsweise die Verminderung magnetischer Anteile, die Herabsetzung hoher Restchloridgehalte, die Erhöhung des Schüttgewichtes, die Schaffung konstanter Werte der spezifischen BET-Oberfläche (in m²/g) und eine keramische Bindung der Eisenoxidteilchen sowie die mögliche nachträgliche Klassierung der leicht angesinterten Mikrogranulate in einzelne, getrennte Fraktionen, welche ihrerseits nur mehr kleine Unterschiede in den Werten der spezifischen Oberfläche aufweisen.

Die pulvermetallurgisch benötigten Eigenschaften sind eine hohe Fülldichte, eine gute Fließfähigkeit, eine enge Gaußverteilung der Granulate, konstant gehaltene geringe Gehalte an Salzen, eine geringe Schwankungsbreite der spezifischen Oberfläche, eine gute Grünfestigkeit zur automatischen Handhabung der gepressten Formteile, eine zuverlässige Reproduzierbarkeit von Toleranzen und Werkstoffeigenschaften sowie eine gute Kantenfestigkeit der Pressteile während der thermischen Behandlung und die Möglichkeit der Anwendung eines geringen Pressdruckes, um die Standzeit der Matrizen zu verlängern.

In vorteilhafter Weise können die erfindungsgemäß hergestellten Eisen- oder Stahlpulvergranulate mit Presshilfsmittel sowie fallweise mit Aufkohlungsmittel, Metallpulvern, pulverförmigen Metalllegierungen, Kristallitwachstumshemmer und weiteren Mikrolegierungsbestandteilen versetzt und sodann pulvermetallurgisch weiter verarbeitet werden.

Ein besonderer Vorteil des Verfahrens besteht darin, dass die ausgewählten Eisen- oder Stahlpulverfraktionen für die weitere Verarbeitung durch Metallpulverspritzgießen (MIM) zur Herstellung metallischer Formteile verwendet werden kann. MIM ist die Abkürzung für Metalpowder Injection Moulding.

Ferner können die Eisen- oder mikrolegierten Stahlpulver mit Presshilfsmittel und Legierungsbildner versetzt, mit oder ohne Nachzerkleinerung direkt verpresst werden.

Anhand von Ausführungsbeispielen wird die Erfindung noch näher erläutert.

### Ausführungsbeispiel 1.

Sprühgeröstetes PPP-Eisenoxid mit einer spezifischen Oberfläche von 4,2 ± 0,25 m²/g und einem Restchloridgehalt von 1.050 ppm Cl⁻ wurde mit de-ionisiertem Wasser zu einer Anschlämmung angemischt und durch den Zusatz von NaOH auf einen pH-Wert von 7,0 eingestellt. Anschließend wurde die Anschlämmung auf einer vertikalen Bandpresse mit de-ionisiertem Wasser gewaschen. Nach dem Auswaschprozess betrugt der Restchloridgehalt 285 ppm Cl⁻.

Der gewaschene Filterkuchen wurde in einer Schwingmühle kontinuierlich nass aufgemahlen, unter dem Zusatz von Tensiden verflüssigt und mit einem Attritor kurzzeitig kontinuierlich homogenisiert. Die magnetischen Eisenoxidanteile können fallweise durch magnetische Nassabscheidung ausgeschieden werden.

Die Suspension wurde auf einen Feststoffgehalt von ca. 67 Gew.-% eingestellt und mit 0,5 Gew.-% Bindemittel versetzt. Im Anschluss daran wurde die Suspension unter Berücksichtigung der bei Eisenpulver oder mikrolegiertem Stahlpulver spezifisch geforderten Granulat-Verteilungskurve sprühgetrocknet. Das Schüttgewicht gegenständlicher grüner Mikro-Granulate lag bei 1.420 g/dm³.

Zur Erzielung eines höheren Schüttgewichtes und gleichzeitiger Herabsetzung des Wertes der spezifischen Oberfläche (BET) der vorgesinterten Eisenoxid-Mikrogranulate auf 1,2 m²/g wurden die grünen Eisenoxidgranulate einer kurzzeitigen thermischen Behandlung in einen vertikalen Ofen ausgesetzt, wobei die Temperatur zur Gänze im Strahlungsbereich um 1.195°C lag und die Durchsatzzeit wenige Sekunden unter oxidierenden Bedingungen betrug. Gleichzeitig sanken die Restchloridgehalte auf den Wert von 35 ppm Cl⁻ ab. Nach dem Austrag wurden die Granulate auf die Reduktionstemperatur abgekühlt.

Die gegenständliche thermische Behandlung führte zu Eisenoxid-Mikrogranulaten mit einer spezifischen Oberfläche von 1,18 m²/g und einem Schüttgewicht von 2.220 g/dm³. Nach erfolgter Klassierung ergab sich folgende

Verteilung der gesinterten und auf Raumtemperatur abgekühlten Eisenoxid-Granulate:

| | |
|---|---|
| +250 µm (60 mesh) | 0,8 % |
| 250 bis 125 µm | 6,5 % |
| 125 bis 88 µm | 36.8 % |
| 88 bis 63 µm | 28,2 % |
| 63 bis 44 µm | 15,6 % |
| - 44 µm (325 mesh) | 12,1 % |

Die Eisenoxid-Granulate wurden auf einen indirekt beheizten Rohrofen aufgegeben und mit Wasserstoff im Gegenstrom und einer Durchgangszeit von 60 Minuten bei einer Temperatur von 870°C reduziert. Das gasförmige Wasser/Wasserstoff-Gemisch wurde über den Taupunkt gefahren und der regenerierte Wasserstoff im Kreislauf gefahren.

Nach dem Ausbringen und Abkühlen des Reduktionsproduktes unter reinem Stickstoff auf Zimmertemperatur wurde das reduzierte, mikrolegierte Stahlpulver unter dem Zusatz von 0,8 Gew.-% Presshilfsmittel direkt verpresst und hinsichtlich der pulvermetallurgischen Eigenschaften untersucht. Es ergaben sich folgende Pulvereigenschaften:

| | |
|---|---|
| Fülldichte: | 3,15 g/cm³ |
| Fließdauer: | 30 s / 50 g |
| Pressdichte* bei 600 MPa: | 7,25 g/cm³ |
| (*unter dem Zusatz von 0,8 Gew.-% Presshilfsmittel) | |
| Kohlenstoffgehalt: | < 0,01 Gew.-& |
| H₂-onset | 0,12 Gew.-% |

### Ausführungsbeispiel 2

Sprühgeröstetes CPP-Eisenoxid mit einer spezifischen Oberfläche von 6,5 ± 0,5 m²/g und einem Restchloridgehalt von 1.520 ppm Cl⁻ wurde mit de-ionisiertem Wasser zu einer Anschlämmung angemischt und durch den Zusatz von Natronlauge auf einen pH-Wert von 7,1 eingestellt. Anschließend wurde die Anschlämmung auf einer horizontalen Filterpresse mit de-ionisiertem Wasser gewaschen. Nach dem Auswaschprozess betrugt der Restchloridgehalt 485 ppm Cl⁻.

Der gewaschene Filterkuchen wurde in einer Kugelmühle unter dem Zusatz von Tensiden verflüssigt und mit nachgeschalteter Sandmühle kontinuierlich nass aufgemahlen und homogenisiert. Die magnetischen Eisenoxidanteile wurden durch nassmagnetische Abscheidung entfernt. Die Suspension wurde auf einen Feststoffgehalt von 78,5 Gew.-% eingestellt und mit 0,8 Gew.-% Bindemittel versetzt. Im Anschluss daran wurde die Suspension sprühgetrocknet, wobei ein hoher Sprühkomanteil unter 44 µm angestrebt wurde. Das Schüttgewicht der grünen Eisenoxid-Mikrogranulate lag bei 1.580 g/dm³.

Zur Erzielung eines spezifischen Oberflächenwertes von 1,95 m²/g wurden die Eisenoxid-Granulate einer thermischen Behandlung im Strahlungsbereich in einen vertikalen Ofen für wenige Sekunden bei einer Temperatur von 1.125°C eingesetzt. Gleichzeitig ergab sich ein Restchloridgehalt von 85 ppm Cl⁻.

Das Schüttgewicht der thermisch behandelten Eisenoxidgranulate lag bei 1.760 g/dm³.

Nach erfolgter Klassierung ergab sich folgende Verteilung der gesinterten Eisenoxidgranulate:

| | |
|---|---|
| + 250 µm (60 mesh) | 0,1 Gew.-% |
| 250 bis 125 µm | 8,1 Gew.-% |
| 125 bis 88 µm | 18,3 Gew.-% |
| 88 bis 63 µm | 28,3 Gew.-% |
| 63 bis 44 µm | 14,2 Gew.-% |
| - 44 µm (325 mesh) | 31,6 Gew.-% |

Die Granulate der Granulatfraktion wurden in einer Hitze auf einen indirekt beheizten Rohrofen aufgegeben und mit Wasserstoff im Gegenstrom und in einer Durchgangszeit von 52 Minuten bei einer Temperatur von 855°C reduziert. Das gasförmige Wasser / Wasserstoffgemisch wurde über den Taupunkt gefahren und der regenerierte Wasserstoff im Kreislauf gefahren.

Nach dem Abkühlen unter einer Stickstoffatmosphäre und Ausbringen des Reduktionsproduktes unter reinem Stickstoff auf Raumtemperatur wurde das reduzierte Eisenpulver unter dem Zusatz von 0,65 Gew.-% Presshilfsmittel direkt verpresst und hinsichtlich der pulvermetallurgischen Eigenschaften untersucht. Es ergaben sich folgende Pulvereigenschaften:

| | |
|---|---|
| Fülldichte: | 2,45 g/cm³ |
| Fließdauer: | 25 s / 50 g |
| Pressdichte*: bei 600 MPa: | 7,05 g/cm³ |
| (*unter dem Zusatz von 0,7 Gew.-% Presshilfsmittel) | |
| Kohlenstoffgehalt: | < 0,01 Gew.-% |
| H₂-Verlust: | 0,09 Gew.-% |

Im nachfolgenden Flussdiagramm werden die Verfahrensstufen bei der Erfindung veranschaulicht.

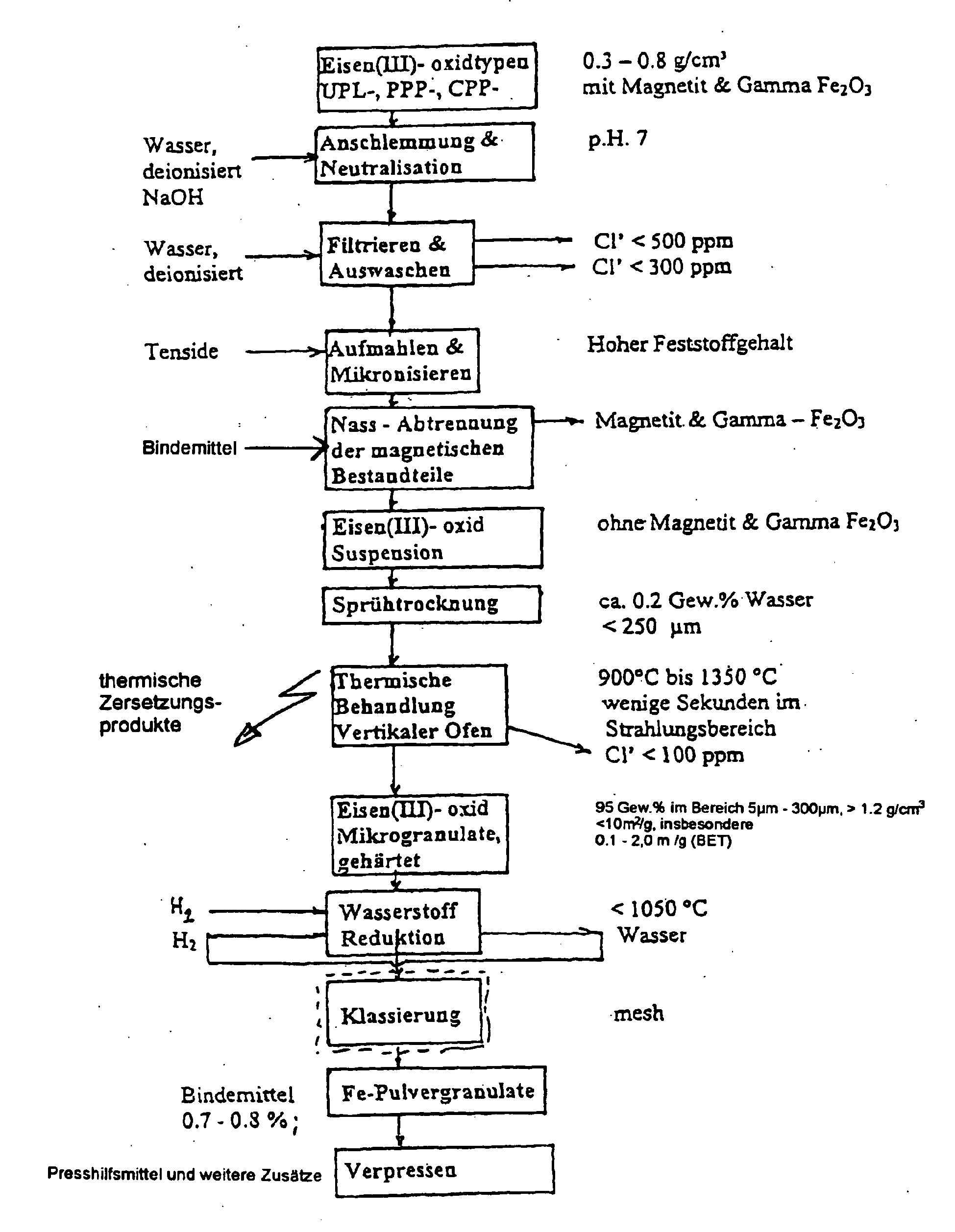

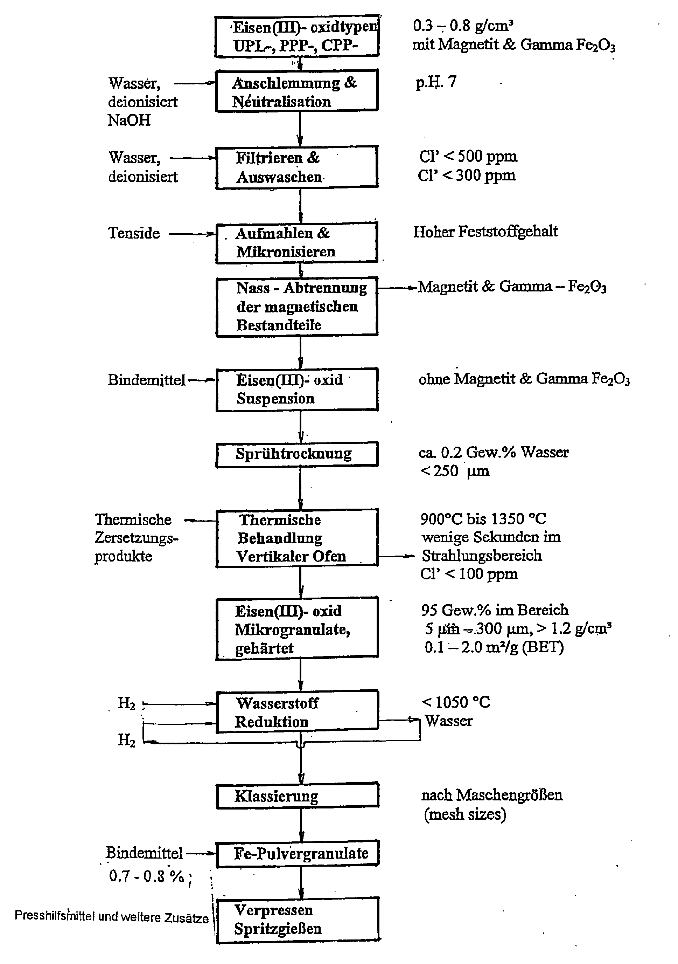

## Patentansprüche

1. Verfahren zur Herstellung von für die Pulvermetallurgie geeignetem Eisenpulver oder mikrolegiertem Stahlpulver, bei dem
- aus salzsauren Abfallbeizen sprühgeröstetes Eisen(III)oxid, welches eine spezifische Oberfläche von über 2,0 m2/g und Restchloridgehalte über 400 ppm Cl- aufweist, gewonnen wird und als Ausgangsmaterial verwendet wird,
- ein Filterkuchen hergestellt wird,
- in einer ersten Stufe wasserlösliche Restchloridanteile der Eisenoxide durch Auswaschen des Filterkuchens mit Wasser reduziert werden, der gewaschene Filterkuchen in grüne Eisenoxide-Mikrogranulate übergeführt wird,
- die Eisenoxid-Mikrogranulate in einer zweiten Stufe durch kurzzeitige Vorsinterung unter oxidierenden Bedingungen bei 900*C bis 1350 °C in vorgesintertes Eisenoxid-Mikrogranulat mit geringeren Werten der spezifischen Oberfläche umgewandelt und gleichzeitig die verbleibenden Restchloridanteile weiter abgebaut werden, und
- die Eisenoxid-Mikrogranulate mit gasförmigen Reduktionsmitteln reduziert werden, wodurch das Schüttgewicht der reduzierten Eisen- oder mikrolegierten Stahlpulver bei über 1200 g/dm3 liegt,
- und das Reduktionsprodukt in reduzierender oder inerter Atmosphäre auf Raumtemperatur abgekühlt wird.

2. Verfahren nach Anspruch 1, **dadurch gekennzeichnet, dass** der Restchloridgehalt des Eisenoxids auf weniger als 100 ppm Cl⁻ und die spezifische Oberfläche (BET) des vorgesinterten Granulats auf einen vorgegebenen Wert in einem Bereich <10m²/g, vorzugsweise von 0,1 bis 2,0 m² verringert werden.

3. Verfahren nach Anspruch 1 oder 2, **dadurch gekennzeichnet, dass** das Ausgangsmaterial in einer Aufschlämmung unter Zusatz wenigstens eines Neutralisationsmittels auf einen pH-Wert von etwa 7,0 ± 1,0 gebracht wird und anschließend gegenüber dem eingesetzten Eisenoxid auf einen Restchloridgehalt um mindestens 50%, vorzugsweise um mehr als 70 % verningert wird.

4. Verfahren nach einem der Ansprüche 1 bis 3, **dadurch gekennzeichnet, dass** die sprühgerösteten Eisenoxidhohlkugelgranulate mit dem reduziertem Restchlordgehalt nass aufgemahlen und mikronisiert werden.

5. Verfahren nach Anspruch 3, **dadurch gekennzeichnet, dass** aus der Eisenoxidsuspension magnetische Eisenoxidbestandteile entfernt werden.

6. Verfahren nach Anspruch 4 oder 5, **dadurch gekennzeichnet, dass** die Eisenoxidsuspension mit einem oder mehreren Bindemitteln und Tensiden versetzt wird.

7. Verfahren nach einem der Ansprüche 4 bis 6, **dadurch gekennzeichnet, dass** die Eisenoxidsuspension mit Sprühtrocknung zu grünen Mikrogranulaten im Bereich von 5 µm bis 300 µm verarbeitet wird.

8. Verfahren nach einem der Ansprüche 1 bis 7, **dadurch gekennzeichnet, dass** zum weiteren Abbau des Restchloridgehaltes die grünen Mikrogranulate bei Temperaturen von etwa 1.000°C bis 1.350°C kurzzeitig, insbesondere wenige Sekunden thermisch im Strahlungsbereich behandelt werden, wobei eine keramische Bindung der Eisenoxidteilchen erfolgt und der Restchloridgehalt auf weniger als 100 ppm Cl⁻ abgesenkt wird.

9. Verfahren nach einem der Ansprüche 1 bis 8, **dadurch gekennzeichnet, dass**
die spezifische Oberfläche (BET) des vorgesinterten Granulats auf einen vorgegebenen Wert im Bereich <10m²/g, insbesondere von 0,1 bis 2 m²/g stabilisiert wird.

10. Verfahren nach einem der Ansprüche 1 bis 9, **dadurch gekennzeichnet, dass** das vorgesinterte Mikrogranulat des Eisenoxids bei Temperaturen unter 1.050°C reduziert wird.

11. Verfahren nach einem der Ansprüche 1 bis 10, **dadurch gekennzeichnet, dass** das Eisenoxid-Mikrogranulat mit Wasserstoff reduziert wird.

12. Verfahren nach einem der Ansprüche 9 bis 11, **dadurch gekennzeichnet,**
**dass** die oxidierende thermische Behandlung der grünen Mikrogranulate und die reduzierende Behandlung der vorgesinterten Mikrogranulate in einer Hitze durchgeführt werden oder wird.

13. Verfahren nach einem der Ansprüche 1 bis 12, **dadurch gekennzeichnet, dass** nach der Reduktion der vorgesinterten Mikrogranulate eine Klassierung des Eisen- oder mikrolegierten Stahlpulvers zu Kornfraktionen durchgeführt wird.

14. Verfahren nach einem der Ansprüche 1 bis 13, **dadurch gekennzeichnet, dass** das Eisen- oder mikrolegierte Stahlpulver in reduzierender oder inerter Atmosphäre abgekühlt wird.

15. Verfahren nach einem der Ansprüche 1 bis 14, **dadurch gekennzeichnet, dass** das Eisen- oder mikrolegierte Stahlpulver überwiegend pulvermetallurgisch weiterverarbeitet wird.

16. Verfahren nach einem der Ansprüche 1 bis 15, **dadurch gekennzeichnet, dass** das Eisen- oder mikrolegierte Stahlpulver direkt verpresst wird.

17. Verfahren nach einem der Ansprüche 1 bis 16, **dadurch gekennzeichnet, dass** das Eisen- oder mikrolegierte Stahlpulver mit Presshilfsmitteln versetzt wird und durch Pressen zu Formkörpern verarbeitet werden.

18. Verfahren nach einem der Ansprüche 1 bis 17, **dadurch gekennzeichnet, dass** das Eisen- oder mikrolegierte Stahlpulver wahlweise mit Aufkohlungsmitteln, Kristallitwachstumshemmer Metallpulvern, Metalllegierungen, Mikrolegierungsbestandteilen oder Legierungsbildnern versetzt wird.

19. Verfahren nach einem der Ansprüche 1 bis 18, **dadurch gekennzeichnet, dass** die Eisen- oder mikrolegierte Stahlpulverfraktion mit einem Pulverspritzverfahren (MIM)-Verfahren unter Zusatz von löslichen thermoplastischen Kunststoffen weiterverarbeitet wird.

## Claims

1. A method for manufacturing of iron- respectively micro-alloyed steel powders for powder metallurgical applications, wherein
spray roasted iron oxides originating from waste hydrochloric acid pickle liquors, exhibiting a specific area in excess of 2.0 m²/g and residual chlorides over 400 ppm Cl', are being used as a raw material source,
• transformed into a filter cake,
• in a first process step the water soluble chloride contents of the iron oxides are reduced by washing the filter cake with water, the washed filter cake being converted into green iron oxide micro-granules,
• the iron oxide micro-granules, in a second process step, by means of a short thermal treatment under oxidizing conditions at temperatures between 900°C and 1350°C, being transformed in pre-sintered iron oxide micro-granules, exhibiting lower specific surface area data and at the same time the residual chloride contents being further reduced, and
• the pre-sintered iron oxide micro-granules being reduced by gaseous reduction media, yielding reduced iron- or micro-alloyed steel powders exhibiting a bulk density in excess of 1200 g/dm³,
• and the reduction product is cooled to room temperature employing reducing or inert atmospheres.

2. The method for manufacturing iron- respectively micro-alloyed steel powders according to claim 1, comprising reduction of the residual chloride level of pre-sintered iron oxide granules to less than 100 ppm and the specific surface area (BET) to a selected value in the range of less than 10 m²/g, preferentially from 0.1 up to 2.0 m²/g.

3. The method according to claim 1 or 2 , wherein the spray roasted iron oxide suspension is transformed by adding at least one neutralization agent into a slurry exhibiting pH-data in the order of 7.0 +/- 1.0 and consequently reduce the chloride level by 50%, preferentially in excess of 70% by means of washing.

4. The method according to claims 1 to 3 , wherein the spray roasted iron oxide hollow sphere granules, exhibiting decreased chloride level, are wet milled and micronized.

5. The method according to claim 3, wherein magnetic materials are separated from the iron oxide suspension.

6. The method according to claim 4 or 5, wherein binders and surfactants are added to the iron oxide suspension.

7. The method according to claim 4 to 6, wherein the iron oxide suspension is spray dried yielding green granules in the range of 5 µm up to 300 µm.

8. The method according to claim 1 to 7, wherein for the further reduction of chlorides the green micro-granules are heat treated for a very short time at temperatures around 1000 °C up to 1350°C, preferentially for a few seconds under radiant heat causing a weak ceramic bond among iron oxide particles and decrease the residual chloride content to less than 100 ppm Cl'.

9. The method according to claim 1 to 8, wherein surface of the pre-sintered granules are decreased to a pre-selected and consistently stable specific surface area (BET) of less than 10 m²/g, preferably between 0.1 and 2.0 m²/g.

10. The method according to claim 1 to 9, wherein the pre-sintered iron oxide micro-granulate is reduced at temperatures of less than 1050°C.

11. The method according to claim 1 to 10, wherein the iron oxide micro-granulate is reduced with hydrogen.

12. The method according to claim 9 to 11, wherein the oxidizing thermal treatment of green granules and the reduction step are carried out in one heat.

13. The method according to claim 1 to 12, wherein after the reduction step the pre-sintered micro-granulates consisting of iron- respectively micro-alloyed powder are classified into mesh sizes.

14. The method according to claim 1 to 13, wherein produced iron- respectively micro-alloyed steel powders are cooled under reducing or inert atmosphere.

15. The method according to claim 1 to 14, wherein the iron- or micro-alloyed steel powders are predominantly further processed by means of powder metallurgical ways.

16. The method according to claim 1 to 15, is directly further processed by pressing operations.

17. The method according to claim 1 to 16, wherein the iron- respectively micro-alloyed steel powder is mixed with pressing aids and further processed by pressing into structural shapes.

18. The method according to claim 1 to 17, wherein the iron- respectively micro-alloyed steel powder is doped with re-carburization agents, crystal growth inhibitors, metal powders, metal alloys, micro-alloying agents or alloy forming agents.

19. The method according to claim 1 to 18, wherein an iron- respectively micro-alloyed steel powder size fraction is further processed by injection molding (MIM) processes employing soluble thermo-plastic materials.

## Revendications

1. Procédé pour la préparation de poudre de fer ou de poudre d'acier micro-alliée, adaptée à la métallurgie des poudres, **caractérisé en ce que** :
• à partir de solutions chlorhydriques de décapage d'acier, l'oxyde de fer(III) est récupéré via une décomposition thermique par pulvérisation, avec une surface spécifique supérieure à 2,0 m³/g et des teneurs en chlorure résiduel supérieures à 400 ppm Cl et est utilisé comme matière première,
• un gâteau de filtre est réalisé,
• dans une première étape, les parts de chlorure résiduel solubles à l'eau sont réduites en lavant le gâteau de filtre avec de l'eau et le gâteau de filtre lavé est transformé en micro-granulats verts d'oxyde de fer,
• les micro-granulats d'oxyde de fer sont transformés, lors d'une deuxième étape, en micro-granulat d'oxyde de fer pré-fritté par un pré-frittage bref dans des conditions oxydantes de 900°C à 1350°C avec valeurs plus faibles de la surface spécifique et **en ce que** les parts de chlorure restant continuent d'être réduites,
• les micro-granulats d'oxyde de fer sont réduits avec des agents de réduction gazeux, la densité en vrac de la poudre de fer réduite ou de la poudre d'acier micro-alliée étant de plus de 1200 g/dm³,
• et **en ce que** le produit de la réduction est refroidi à la température ambiante dans une atmosphère de réduction ou inerte.

2. Procédé selon la revendication 1, **caractérisé en ce que** la teneur en chlorure résiduel de l'oxyde de fer est réduite à moins de 100 ppm CI et que la surface spécifique (BET) du granulat pré-fritté est réduite à une valeur prescrite dans une plage de < 10m²/g, de préférence de 0,1 à 2,0 m²/g.

3. Procédé selon la revendication 1 ou 2, **caractérisé en ce que** la matière première est amenée à un pH d'environ 7,0 +/-1,0 dans une suspension avec apport d'au moins un agent de neutralisation et qu'elle est réduite ensuite, par rapport à l'oxyde de fer utilisé, à une teneur de chlorure résiduel d'au moins 50%, de préférence de plus de 70%.

4. Procédé selon l'une des revendications 1 à 3, **caractérisé en ce que** les granulats d'oxyde de fer sous forme de billes creuses grillés par pulvérisation avec teneur réduite en chlorure résiduel sont broyés au mouillé et micronisé.

5. Procédé selon la revendication 3, **caractérisé en ce que** des éléments d'oxyde de fer magnétiques sont enlevés de la suspension d'oxyde de fer.

6. Procédé selon la revendication 4 ou 5, **caractérisé en ce que** la suspension d'oxyde de fer est mélangée avec un ou plusieurs liants et agents tensioactifs.

7. Procédé selon l'une des revendications 4 à 6, **caractérisé en ce que** la suspension d'oxyde de fer est transformée en micro-granulats verts dans la plage 5 µm à 300 µm avec un séchage par pulvérisation.

8. Procédé selon l'une des revendications 1 à 7, **caractérisé en ce que**, pour continuer à réduire la teneur en chlorure résiduel, les micro-granulats verts sont traités thermiquement de manière brève, notamment quelques secondes, dans la plage de rayonnement à des températures d'environ 1.000°C à 1.350°C, ce qui donne une liaison céramique des particules d'oxyde de fer et ce qui abaisse la teneur de chlorure résiduel à moins de 100 ppm Cl.

9. Procédé selon l'une des revendications 1 à 8, **caractérisé en ce que** la surface spécifique (BET) du granulat pré-fritté est stabilisée à une valeur prescrite dans la plage < 10 m²/g, notamment de 0,1 à 2 m²/g.

10. Procédé selon l'une des revendications 1 à 9, **caractérisé en ce que** le micro-granulat pré-fritté de l'oxyde de fer est réduit à des températures inférieures à 1.050°C.

11. Procédé selon l'une des revendications 1 à 10, **caractérisé en ce que** le micro-granulat d'oxyde de fer est réduit à l'hydrogène.

12. Procédé selon l'une des revendications 9 à 11, **caractérisé en ce que** le traitement thermique oxydant des micro-granulats verts et le traitement de réduction des micro-granulats pré-frittés est ou sont effectués à la chaleur.

13. Procédé selon l'une des revendications 1 à 12, **caractérisé en ce que**, après la réduction des micro-granulats pré-frittés, une classification de la poudre de fer ou de la poudre d'acier micro-alliée est effectuée en fractions granulométriques.

14. Procédé selon l'une des revendications 1 à 13, **caractérisé en ce que** la poudre de fer ou la poudre d'acier micro-alliée est refroidie dans une atmosphère de réduction ou inerte.

15. Procédé selon l'une des revendications 1 à 14, **caractérisé en ce que** la poudre de fer ou la poudre d'acier micro-alliée est transformée ensuite principalement du point de vue de la métallurgie des poudres.

16. Procédé selon l'une des revendications 1 à 14, **caractérisé en ce que** la poudre de fer ou la poudre d'acier micro-alliée est pressée directement.

17. Procédé selon l'une des revendications 1 à 16, **caractérisé en ce que** la poudre de fer ou la poudre d'acier micro-alliée est pressée avec des agents auxiliaires de pressage et transformé en corps moulés par pression.

18. Procédé selon l'une des revendications 1 à 17, **caractérisé en ce que** la poudre de fer ou la poudre d'acier micro-alliée est mélangée au choix à des agents de carburation, inhibiteurs de croissance cristallites, poudres métalliques, alliages métalliques, éléments de micro-alliage ou formateurs d'alliage.

19. Procédé selon l'une des revendications 1 à 18, **caractérisé en ce que** la fraction de poudre de fer ou de poudre d'acier micro-alliée est transformée par un procédé de pulvérisation de poudre (procédé MIM) avec addition de matériaux thermoplastiques.
